Europäisches Patentamt

European Patent Office

Office européen des brevets

(11) Publication number: **0 478 997 A1**

# EUROPEAN PATENT APPLICATION

(21) Application number: **91115263.5**

(22) Date of filing: **10.09.91**

(51) Int. Cl.⁵: **G01B 7/02, G01V 3/10**

(30) Priority: **11.09.90 US 580822**

(43) Date of publication of application:
**08.04.92 Bulletin 92/15**

(84) Designated Contracting States:
**DE FR GB**

(71) Applicant: **ALLIANT TECHSYSTEMS INC.**
**5901 Lincoln Drive**
**Edina, Minnesota 55436(US)**

(72) Inventor: **Paulson, Kenneth W.**
**13875 Chestnut Drive No. 305**
**Eden Pairie, Minnesota 55344(US)**
Inventor: **Van Sloun, Peter H.**
**207 18th Avenue North**
**Hopkins, Minnesota 55343(US)**
Inventor: **VandeWaa, David**
**700 Cambridge Street No. 218**
**Hopkins, Minnesota 55343(US)**

(74) Representative: **Altenburg, Udo, Dipl.-Phys. et al**
**Patent- und Rechtsanwälte**
**Bardehle-Pagenberg-Dost-Altenburg**
**Frohwitter-Geissler & Partner Postfach 86 06 20**
**W-8000 München 86(DE)**

(54) Metal locating device using magnetic field distortion.

(57) A metal locating device comprising a transmitting coil positioned about a first axis and two receiving coils positioned about axes parallel to and equally displaced from the first axis and operable to provide outputs which are subtracted to produce a resulting signal that reverses phase at a point directly in line with the metal being located.

FIG. I

## BACKGROUND OF THE INVENTION

The present invention relates to apparatus for detecting the location of metal which may be buried in a non-magnetic material such as concrete. The invention can be used, for example, to locate metal reinforcing bars in concrete structures so that holes may be drilled to expose the bar or, in the case of intentional destruction, the insertion of explosives between adjacent reinforcing bars (hereinafter referred to as "rebars").

Metal finding devices have long been known but heretofore have been generally only marginally accurate. For example, in a U.S. Patent 4,438,754 issued to Walter C. Nanny et al., March 27, 1984 an electromagnetic sensor is provided for controlling a tool such as a saw so as to enable it to remove reinforced concrete from about an underwater pipe or other metallic object. Two magnetic field generating probes on opposite sides of the saw generate magnetic fields extending between the north pole of each probe and south pole of the other probe and then the disturbing effect of the magnetic material in the field provides an output that can be utilized to determine the position of the metal member. One difficulty with this type of system is that it cannot measure exactly and with high accuracy the position of the metal member because normally such devices operate to produce an output which peaks in a relatively flat curve as the position of the bar is approached. This does not permit an operator to very precisely locate the center of the bar. Furthermore, such devices are usually unwieldy and have to be tuned in order to maintain what accuracy they have.

## SUMMARY OF THE INVENTION

The present invention operates on a phase reversing system which, instead of producing a single output and locating its peak, operates to produce two outputs from sensing coils that are offset from one another. The two outputs are then subtracted so as to produce the resultant output that crosses the 0 axis at precisely the center of the rebar. The device does not have to know how deep the rebar is located in the concrete since the phase reversal at the 0 point will occur regardless of the magnitude of the curves and thus tuning is not necessary in order to produce an accurate output. Further benefits and advantages of the present invention will be obtained upon an examination of the following specification and claims taken in connection with the drawings.

## BRIEF DESCRIPTION OF THE DRAWINGS

Fig. 1 is a schematic representation of the present invention positioned at a first location with respect to the metal rebar.

Fig. 2 is a schematic representation of the present invention located at a second position with respect to the metal rebar.

Fig. 3 is a schematic representation of the present invention located at a third location with respect to the metal rebar.

Fig. 4 is a graph showing the envelope and phase of the detected signal output of the present invention as it passes through the locations of Figs. 1, 2 and 3 for two different sizes and/or depth bars.

Fig. 5 is a schematic representation of a single curve detector similar to those found in the prior art and used in the present invention for confirmation purposes.

Fig. 6 is a graph showing the envelope of the detected signal of the apparatus of Fig. 5 as it passes by the metal rebar for the case of two different sizes and/or depth bars.

Fig. 7 is a cross-sectional view of the arrangement of coils of the present invention.

Fig. 8 is a schematic diagram of the circuitry used to analyze the signals from the present invention to produce a desired indication.

## DETAILED DESCRIPTION OF THE PREFERRED EMBODIMENT

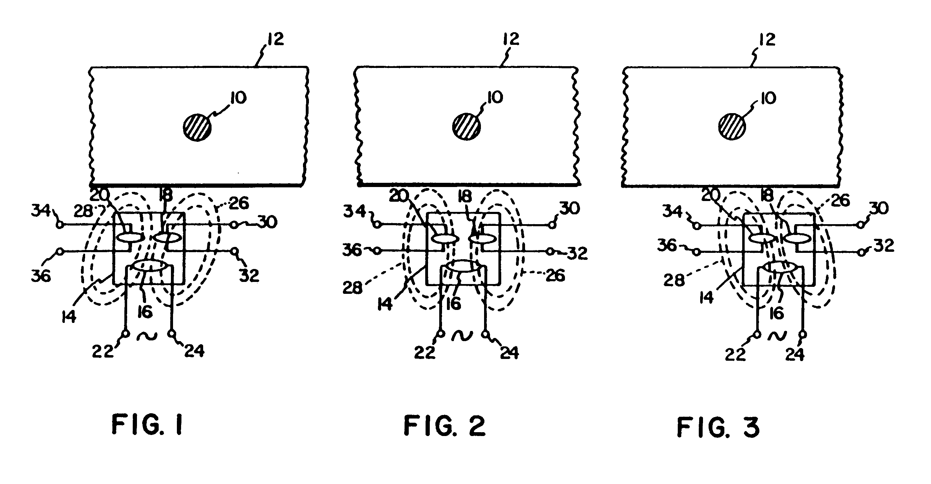

In Fig. 1 a metal rebar 10 is shown buried in a concrete structure 12. The metal locating device of the present invention is shown as a box 14 having three magnetic field coils 16, 18 and 20. Coil 16 is a transmitting coil which has terminals 22 and 24 connected to a suitable source of alternating current oscillating at, for example 2 kilohertz. Coil 16 operates to generate a magnetic field shown having two magnetic loops shown as dash lines 26 and 28 passing through receiving coils 18 and 20, respectively. It will be noted that the locating member 14 is positioned to the left of metal rebar 10 and accordingly the magnetic loops 26 and 28 are shown skewed slightly from lower left to upper right toward the rebar. This operates to induce signals in coils 18 and 20 of different magnitudes, i.e., receiving coil 18 will receive more magnetic flux than receiving coil 20 and accordingly the output from coil 18 on terminals 30 and 32 will be greater than the output from coil 20 on terminals 34 and 36.

In Fig. 2 the same reference numerals have been used to identify the same elements as in Fig. 1 and is seen that the locating member 14 is now substantially directly below rebar 10. Under this circumstance, the magnetic field loops 26 and 28 are substantially vertically oriented and pass through receiving coils 18 and 20 substantially equally. Accordingly, the output at terminals 30 and 32 will be substantially equal to the output at terminals 34 and 36.

In Fig. 3 where again the same reference numerals are used to identify the same elements as in Figs. 1 and 2, the locating member 14 is now shown to the right of metal rebar 10 and again the magnetic field loops 26 and 28 are skewed although this time from lower right to upper left thereby causing the flux passing through coil 20 to exceed that passing through coil 18. Accordingly the signal from terminals 34 and 36 will now be greater than the signal from terminals 30 and 32.

As will be seen the outputs from terminals 34 and 36 are subtracted from the outputs from terminals 30 and 32 to produce a resulting signal the amplitude of which becomes 0 when the two outputs are equal.

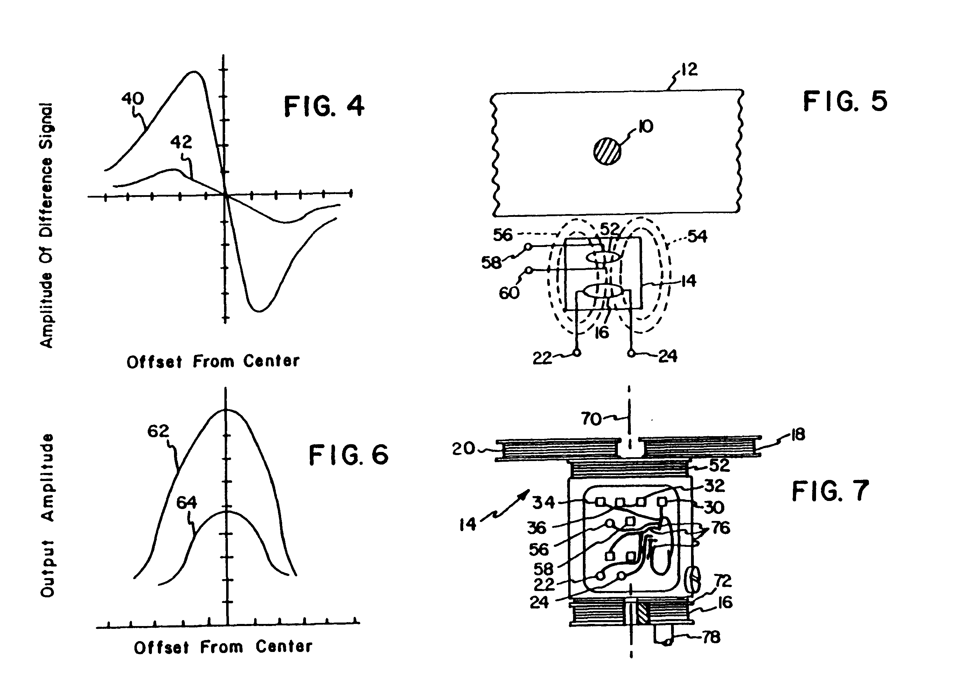

In Fig. 4 a first curve 40 shows the subtraction of signals producing an output which is relatively low on the left hand side, reaches a peak and then drops rapidly through 0 to a negative peak and finally to a smaller negative signal at the right side of Fig. 4. Curve 40 represents the signal which would be obtained by an envelope of the subtraction of the outputs of coils 34 and 36 from the outputs of coils 30 and 32 as the apparatus 14 in Figs. 1, 2 and 3 moves from left to right. A second curve is shown in Fig. 4 identified by reference numeral 42 which indicates the outputs under the circumstances where the metal rebar 10 is located more deeply into the concrete away from the sensor than is the case with respect to curve 40. It is noted that in both cases the curves pass through the 0 point at the exact center of bar 10 as the device 14 moves.

The above-described operation would be satisfactory in all cases where a single rebar 10 is located in a structure such as concrete 12 but, unfortunately, as is more often the case, a plurality of metal rebars are located within the concrete and, in fact, both horizontally and vertically arranged rebars are quite normal. It will be observed that as the member 14 is moved to a position which is half way betwen two buried metal rebars the output will also drop to 0 just as if a metal rebar were located at that position. To overcome this difficulty the present invention utilizes a confirmation coil which will be described in connection with Fig. 5.

In Fig. 5 the transmitting coil 16 is again shown and a receiving coil 52 is shown located above it. Transmitting coil 16 operates to produce a toroidal magnetic field again shown having two loops indicated by dash lines 54 and 56 in a manner similar to that shown in Figs. 1, 2 and 3. In Fig. 5, however, since coil 52 is located directly above coil 50 the magnetic flux it senses peaks once when it is directly under bar 10 and decreases on both sides thereof. The envelope of the output of coil 52 on terminals 58 and 60 can be seen in Fig. 6 by a curve 62 which goes from a fairly small value on the left side and which peaks at the center and then falls off on the right side. A similar curve 64 shows the output as it might exist with the metal rebar 10 located more deeply in the concrete structure 12. In both cases it will be noted that a peak occurs at the location of the metal bar (and not between two rebars). It will also be noted that the flatness of the tops of these peaks would make it difficult for it to be used alone to locate rebars with the extreme accuracy desired with the present invention. The coils 16 and 52 of Fig. 5 do, however, produce a useful function in that they will indicate the presence of metal bar 10 above the structure 14 so that when the apparatus described in connection with Figs. 1, 2 and 3 crosses the 0 axis it can be assured that it is doing so at a metal bar location and not at a position which is between two metal bars.

Fig. 7 shows a cutaway section of one desired embodiment of the present invention. In Fig. 7 the transmitting coil 16 is shown near the bottom of the figure and receiving coils 18 and 20 are shown at the top substantially equally offset from the central sxis 70 about which coil 16 is wound. Accordingly, the apparatus shown in Fig. 7 including coils 16, 18 and 20 will operate as described in connection with Figs. 1, 2 and 3 to produce outputs at terminals 30, 32, 34 and 36. Also shown in Fig. 7 is the confirmation coil 52 located above coil 16 and centered about axis 70 so as to operate as was described in connection with Fig. 5. A fifth coil 72 which is relatively small and positioned quite close to coil 16 is shown in Figure 7 centered about axis 70. Coil 72 is used in the present invention to provide a signal of magnitude approximately equal to the magnitude of the signal from coil 52 if no metal at all were in the vicinity. This signal is subtracted from the signal from coil 52 and cancels the steady state signal for ease in processing the signal. More specifically since 72 is small and located adjacent coil 16 its output will be substantially constant with respect to passing by the metal bar 10 and will only vary with the constant signal produced by coil 16. As will be described, this signal is subtracted from the signal produced by coil 52 which simplifies the processing of electronics for the confirmation output by cancelling a portion of the confirmation output which exists when there is no metal near the coils.

In Fig. 7, the terminals from the coils are connected to terminals 30, 32, 34, 36, 22, 24, 56, and 58 which are, in turn, connected the exterior of the apparatus by wires shown generally by reference numeral 76 and which exit from the sensor 14 via a conduit 78.

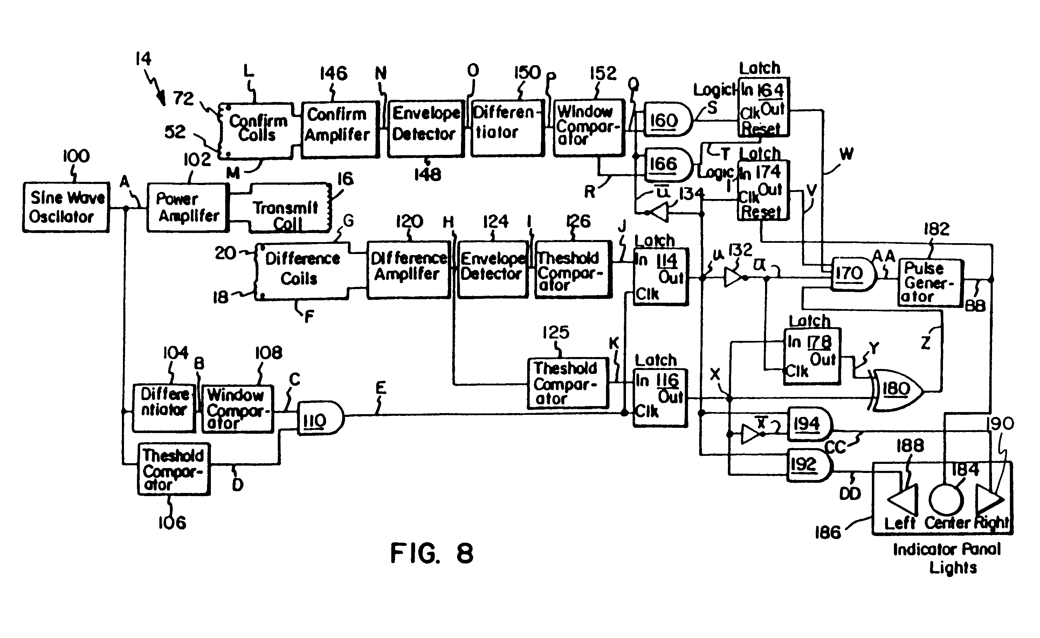

Referring now to Fig. 8, the processing electronics are shown for receiving the outputs from the coils previously described and for producing therefrom, a signal which will indicate to an operator where the sensor device 14 is with respect to the metal rebar, i.e., whether sensor 14 needs to be moved to the left or right or is, in fact, directly over a metal bar.

In Fig. 8, a sign wave oscillator 100 is shown to generate a sinusoidal signal A which may be a frequency approximately 2 kilohertz. The signal A is presented to a power amplifier 102 which supplies input to the transmit coil 16. Transmit coil 16 in turn produces a magnetic field which will be sensed by the receiving coils 18 and 20 and by the confirm and steady state coils 52 and 72 respectively.

As will be described hereafter, the system converts the analog signals from the coils to digital signals for ease in processing. Accordingly, it is desirable to provide a timing signal for use in synchronizing the various pulses produced and for determining the phase of the output signal of coils 18 and 20. To this end, the 2 kilohertz sinusoidal signal A is shown providing an input to a differentiator 104 and threshold comparator 106. The output from threshold comparator 106 will be a positive pulse for each positive half cycle of the input A. This is shown as a signal identified as D in Fig. 8. The output of the differentiator 104 is a signal B which is shifted in phase from signal A by 90 degrees. This signal B is presented to window comparator 108 so as to produce an output signal C which has a positive pulse of duration which is determined by the breath of the window and is generally quite sharp. Output signal C pulses will occur every half cycle at or near the peak of signal A and will occur substantially exactly half way between the pulses in signal D. Accordingly, when pulses C and D are presented to an and gate 110 an output signal E will be produced consisting of a series of pulses of rather sharp duration and occurring every full cycle of the input signal A. In other words, signal E will be a series of pulses at the 2 kilohertz frequency. Signal E constitutes the clock pulse for the system and is shown connected as the clock input to first and second latches 114 and 116 whose operation will be described hereinafter.

It will be noted that the receiving coils 18 and 20 are connected together with opposing polarity so that the signals therefrom identified as F and G will be 180 degrees out of phase. Accordingly, when these signals are presented to a difference amplifier 120 an output signal H is produced which is the difference between the signals F and G. As the sensor 14 is moved in a first direction with respect to a metal rebar, the coil 18 may, for example, be located more closely to the metal bar than coil 20. Accordingly, its output will increase first to a peak value and drop off while, later in the continued motion, the signal from coil 20 will increase to a peak value and then drop off. These signals are at the 2 kilohertz freqquency and will produce an 2 kilohertz output whose envelope appears similar to that shown in Fig. 4 which varies rather slowly depending on the speed of the movement produced by the operator. The subtracted high frequency signals will decrease in magnitude as the rebar is approached and will cross the 0 point when detector 14 is located directly beneath the center of the rebar. Thereafter the output signal will be of reversed phase since the coil 20 is now representing the higher value as the detector moves away from the rebar. If the apparatus were used in reverse, the output from coil 20 would precede in magnitude the output from coil 18 and the same curve would be generated as found in Fig. 4.

The difference signal from amplifier 120 is identified as H and is presented to an envelope detector 124 and to a threshold comparator 125 which operates to produce a positive signal whenever the signal H is above a preselected value and a negative signal whenever the value of H is below a preselected value. In other words threshold comparator 125 operates to produce an output K which is like the signal H only squared off. The signal K is presented to latch 16 which also receives the clock input E and latch 116 operates to produce a signal X which will be a "1" whenever K and E are in phase and will be a "0" whenever K and E are out of phase. The signal X is for use to be later described. Envelope detector 124 also includes a full wave rectifier and accordingly the output signal I from envelope detector 124 is not exactly like the signal in Figure 4 but rather is a signal with positive lobes on both sides of the zero point. This signal is presented to a threshold comparator 126 which operates to produce a positive signal whenever the envelope signal I is above a preselected value and thus produces a positive signal on both sides of the location of the metal bar. This signal identified as J is presented as the input to latch 114 which, it will be recalled, receives a clock signal E at its clock input. Accordingly, the output U from latch 114 will be the same as signal J but displaced by one clock pulse, i.e., a signal which goes from a 0 to a 1 after the first clock signal occurs subsequent to the envelope signal I exceeding the threshold value of comparator 126, drops back to a 0 when the signal I falls below the threshold, rises again to a 1, upon the first clock pulse after the signal I reaches the threshold on the other side of the center and finally back to a 0 when I again crosses the threshold. Signal U will, like signal J, have positive values on both sides of the center (the exact location of the center of the metal rebar) and will be only different in being offset by one clock pulse from signal J.

Signal U is identified as the "threshold signal" and tells the system when the input signal is above the predetermined threshold. For future use the input signal U is converted to a mirror image or U bar signal by invertors 132 and 134 as will be explained hereinafter.

Referring now to the upper portion of Fig. 8, the confirm coils 52 and 72 are also shown connected together in opposite polarity so that the small steady state signal produced by the transmit coils 16 generated in coil 72 and identified as signal L will be subtracted from the confirmed signal coil 52's output identified by reference numeral M. This difference is provided to a confirm amplifier 146 which will operate to produce a 2 kilohertz difference signal of amplified magnitude identified by letter N which is presented to an envelope detector 148. The output of envelope detector 148 will be a signal O which is similar to that shown in Fig. 6, i.e., a signal which peaks in the general area where the detector 14 is located under a metal bar. Signal O is presented to a differentiator 150 the output of which, signal P indicates the slope of the wave form of signal O. Signal P crosses over a 0 axis at a point approximately where the peak of signal O occurred, i.e., under the metal bar. The signal P is presented to a window comparator 152 to produce an output signal Q which is positive from a point where the differentiated signal crosses the upper threshold until it crosses the lower threshold on the other side of the position of the metal rebar. In other words, signal Q appears as a 1 when signal O is increasing for a time prior to the encountering of the metal bar until a time just after the metal bar has been past. Window comparator 152 also produces a signal R which is the mirror image of signal Q, i.e., is a 0 when the Q signal is a 1.

The Q signal is shown providing an input to a first and gate 160 which also receives a U bar input from invertor 134. It will be recalled that the U bar input is 0 from the time of the upwardly moving threshold crossing of the envelope signal I until the first clock pulse after the recrossing thereof going down and then becomes a 1 until the next threshold cross going up and then remains a 0 until the fourth crossing of the threshold going down. Thus the U bar signal will provide a positive input to and gate 160 for a short time on both sides of the position of a metal rebar. Since the Q bar signal is positive during all of this time until shortly after the position of the metal bar, because signal O is increasing, the output of the and gate 160, identified as a signal S, will be a positive signal on both sides of the crossover, i.e, the metal rebar's center. Signal S is presented to the clock input of a second latch 164 whose intput is connected to a logical 1. Thus, the output of latch 164, a signal identified as W, will be a 1 from the time the S signal becomes positive on one side of the location of the bar until it is reset by a reset input T. It will be recalled that signal R was the inverse of signal Q and this signal is presented to an and gate 166 which also receives an input U bar from invertor 134. Thus, the output of and gate 166, signal T, will be negative until shortly after the position of the metal bar, i.e., the lower cross over point of the threshold of signal T. Thus a reset signal to latch 164 will occur shortly after the cross over position of the metal rebar. Accordingly, signal W will be negative until shortly before the cross over point at which time signal S causes signal W to have a 1 value until shortly after the cross over point at which time signal T resets latch 164. The result of these signals is that W will be positive if signal O is increasing at the time U bar goes high, and negative if signal O is decreasing when U bar goes high. Signal W is presented as one input to a third and gate 170 whose other inputs will be hereinafter described.

The threshold signal U will, as previously described, be 1 signal until the first clock pulse after the I signal has reached the threshold nearest the cross over point at which time it becomes a 0 and remains so until the first clock pulse after the I signal has again passed the threshold on the other side of the cross over point. The U signal is presented as the clock input to the third latch 174 which has a logic 1 input and which produces an output signal V. Output signal V will therefore be a 0 signal until the U signal occurs and will therafter remain a 1 until it is reset by an input at its reset terminal to be hereinafter described. In any event, the V signal is positive from a time prior to reaching a cross over point to a time thereafter when the reset signal is activated. The V signal is presented as a second input to and gate 170. A third input to and gate 170 is the U bar signal which it will be recalled has a positive value from a time 1 clock pulse after the threshold is crossed going down until 1 clock pulse after the threshold has again been passed going up on other side of the cross over point. Again the U bar signal will be positive on either side of the cross over point.

The U bar signal from invertor 132 is also presented as the clock input to a fourth latch 178 which receives as it input the output of latch 116, a signal identified as X, and referred hereunto as the phase signal. More specifically it will be recalled that latch 116 receives the clock signal E and the pulse signal K as its input. Since the clock signal occurs in the middle of a K signal at all times on one side of the cross over point the output from latch 116 will be a 1 during the entire time approaching the cross over point. At the cross over point the K signal reverses phase and accordingly upon the first clock signal after the cross over point the X signal will drop to a zero and remain there until another bar is approached. Accordingly, the output of latch 178, a signal identified as Y, will be a 1 as soon as the U bar signal becomes a 1 on a first side of the cross over point and will remain a 1 thereafter even though the U bar signal drops to a 0 because the X signal does not produce another pulse. The U output from latch 178 is presented as one input to an exclusive or gate 180 which has the X signal as its other input. Exclusive or gate produces an output signal Z whenever the inputs X and Y are different. Thus since X is a 1 until the first clock pulse after the cross over point and since the Y is a 1 from a time just prior to the cross over point, the Z will be a 1 until the Y signal occurs and will then drop to a 0 until the first clock pulse after the cross over point at which time it will become a 1 again.

The Z signal is utilized as the fourth input to the and gate 170 and since it is a zero during the crossover, and gate 170 will produce no output until the Z signal becomes a 1 which, as explained above, occurs at the first clock pulse after the cross over point, i.e., the center of the metal rebar. Accordingly, the output of and gate 170 identified as signal AA will become a 1 at the first clock pulse after the cross over point and will quickly become a 0 again when the V input to and gate 170 becomes a 0. The AA signal is presented to a pulse generator 182 and operates to produce a pulse output BB upon the occurrence of a AA signal. The BB signal is of predetermined duration and is presented to the center indicator light 184 of an indicator panel 186 also having a left indicator light 188 and a right indicator light 190. The center indicator light will therefore blink on the first clock pulse past the center line of the bar being sensed and will go off at the end of pulse from the pulse generator 182. This indicates that the center line has been reached and precisely (within one clock pulse) identifies the desired point. One clock pulse after the crossover point is, for all intents and purposes, exactly at the crossover point since the clock pulse is so short that the sensor apparatus cannot move from the center very much at all. The BB signal is presented as the reset signal to the latch 174 and accordingly upon the occurrence of the BB signal the output V drops to zero thereby ending the AA signal.

The X signal output from latch 116 is also presented to a fourth and gate 192 which receives the U signal as its other output. Since the X signal is a 1 until the first clock pulse after the crossover and since the in signal is a 1 until the time that the threshold is crossed going down which is shortly before the point where the crossover of the metal rebar occurs, the output signal DD will be a 1 during this time and a 0 thereafter. This in effect tells the operator that the bar is located in one direction from the present location. For example it will light the left indicator light 188 to show the operator that he should move in the left direction to find the location of the rebar.

A final and gate 194 receives the X bar input and the U input. Recalling that the X bar input is a 0 until the first clock pulse after the crossover point and is then a 1 until shortly before the crossover point, the output signal CC from and gate 194 will be a 1 during the time that the U signal is a 1 on the other side of the crossover and is a zero otherwise. This signal operates the right indicator light 190 and effectively tells the operator that he must move to the right to find the location of bar. After the operator has moved either from the left or the right toward the bar, left and right lights 188 and 190 go out and the center light 184 blinks at the exact crossover point.

The operation described above works exactly the same way whether approaching from either direction with the end result that the operator can move the apparatus along the concrete wall knowing which direction to move by the lights 188 and 190 and then be able to identify the precise point of the center of the rebar with the flashing of light 184. At this point he may put a mark to locate the position and then move on to other rebars and similarly locate them. The end result is to locate the positions of the rebars and, when desired, the positions of the center locations between adjacent rebars.

It is thus seen that we have provided a unique apparatus for determining the position of a concrete reenforcing bar or any other piece of metal which is buried in an unknown material and have been able to do so with exact precision previously unobtainable. Many advantages and uses of the invention will occur to those skilled in the art and we do not wish to be limited to the disclosure used in describing a specific preferred embodiment. Although the present invention has been described with reference to preferred embodiments, workers skilled in the art will recognize that changes may be made in form and detail without departing from the spirit and scope of the invention.

**Claims**

1. Apparatus for locating a metal member comprising:

   a first coil mounted about a first axis at a first location there along and operable to generate a magnetic field to encompass the metal member;

   a second coil mounted about a second axis parallel to but displaced on a first side of the first axis by a first distance, the second coil being positioned on the first side adjacent a second location along the first axis, the second location being spaced along the first axis by a predetermined amount from the first location so as to reduce the coupling between the first and second coils and allow the magnetic field therebetween to distort in the presence of the metal member, the second coil being operable to receive the magnetic field and produce a first signal in accordance with the magnitude thereof, the magnitude changing with changes in the distortion of the magnetic field due to the position of the metal member;

a third coil mounted about a third axis, parallel to but displaced on a second side of the first axis by the first distance, the third coil being positioned on the second side adjacent the second location along the first axis, the third coil being operable to receive the magnetic field and produce a second signal in accordance with the magnitude thereof the magnitude changing with changes in the distortion of the magnetic field due to the position of the metal member, the first and second signals being of the same magnitude when a metal member intersects the first axis as an indication of the location of the metal member.

2. Apparatus according to claim 1 further including signal responsive means connected to receive the first and second signals and to produce a first output signal indicative of the difference therebetween.

3. Apparatus according to claim 2 further including indicator means connected to receive the first output signal and to provide an indication when the output signal is substantially zero.

4. Apparatus according to claim 1 further including a fourth coil mounted substantially around the first axis and operable to receive the magnetic field and produce a third signal in accordance with the magnitude thereof, the third signal peaking when the metal member intersects the first axis.

5. Apparatus according to claim 4 further including a fifth coil mounted around the first axis and operable to produce a fourth signal of magnitude which is subsantially constant with changes in the location of the metal member and generally of magnitude indicative of the output of the fourth coil in the absence of the metal member.

6. Apparatus according to claim 5 further including means to receive the third and fourth signals and to produce a second output signal indicative of the difference therebetween.

7. Apparatus according to claim 2 wherein the signal responsive means includes means to receive the first output signal and to convert it to a first binary signal which changes from a first state to a second state whenever the magnitude of the first signal is above a predetermined value.

8. Apparatus according to claim 7 wherein the binary signal is in the first state for a first distance on either side of the point where the metal member intersects the first axis and in the second state for a second distance on either side of the first distance.

9. Apparatus according to claim 8 wherein the signal responsive means includes means to receive the binary signal to indicate the direction that the metal member is located.

10. Apparatus according to claim 9 including indicator means to receive the binary signal and the first output signal to indicate the direction towards the metal member when the metal member is not intersecting the first axis and to indicate when the metal member intersects the first axis.

11. Apparatus for detecting the position of a metal member comprising:

magnetic field generating means operable to produce a magnetic field generally about a first axis, which field is distorted in the proximity of the metal member;

first field detecting means located adjacent the axis on a first side thereof and spaced a first distance from the magnetic field generating means along the first axis sufficient to reduce the coupling between the magnetic field generating means and the first field detecting means so that the magnetic field distorts in response to the presence of the metallic member, the first field detecting means being operable to produce a first signal indicative of the magnitude of the field it receives;

second field detecting means located adjacent the axis on a second side thereof and spaced the first distance from the magnetic field generating means along the first axis, the second field detecting means being operable to produce a second signal indicative of the magnitude of the field it receives;

signal processing means receiving the first and second signals and operable to produce a first output signal when the magnitudes are substantially equal as an indication that the metal member is at a predetermined position.

12. Apparatus according to claim 11 including periodic signal generating means connected to drive the magnetic field generating means at a first frequency.

13. Apparatus according to claim 12 wherein the first and second outputs are different so as to provide a first series of pulses at the first frequency, the pulses changing phase when the apparatus is moved in a first direction past the metal member at the predetermined location.

14. Apparatus according to claim 13 including logic means connected to receive the first series of pulses to provide a resultant signal when the pulses change phase.

FIG. 1   FIG. 2   FIG. 3

FIG. 4

FIG. 5

FIG. 6

FIG. 7

FIG. 8

European
Patent Office

EUROPEAN SEARCH
REPORT

Application Number

EP 91 11 5263

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 097 401   (CENTRE D'ETUDE DE L'ENERGIE NUCLEAIRE) | 1,2,11,12 | G 01 B 7/02 |
| Y |   (* the whole document *) | 3,4,7,12, 14 | G 01 V 3/10 |
|  | – – – |  |  |
| Y | EP-A-0 122 899   (SCHONSTEDT INSTRUMENT COMPANY) * the whole document * * | 3,4,7,12, 14 |  |
|  | – – – |  |  |
| A | EP-A-0 125 741   (SCOPEMOOR LTD) * page 7, line 9 - page 16, line 21 * * page 30, line 10 - page 37, line 21; figures * * | 1-4,7,8 |  |
|  | – – – |  |  |
| A | GB-A-2 197 485   (ANSALDE S.P.A) * the whole document * * | 1,2,11,12 |  |
|  | – – – |  |  |
| D,A | US-A-4 438 754   (SHELL OIL CO.) * the whole document * * | 1,11 |  |
|  | – – – – – |  |  |

|  |
|---|
| TECHNICAL FIELDS SEARCHED (Int. Cl.5) |
| G 01 B G 01 V |

The present search report has been drawn up for all claims

| Place of search | Date of completion of search | Examiner |
|---|---|---|
| The Hague | 30 January 92 | BROCK T.J. |